# EUROPEAN PATENT SPECIFICATION

(11) **EP 3 338 559 B1**
(45) Date of publication and mention of the grant of the patent: **30.09.2020**
(21) Application number: 16838145.7
(22) Date of filing: 19.08.2016
(51) Int. Cl.: A23G 1/32, A23G 1/34, A23G 1/36, A23G 1/40, A23G 1/48

(54) **CHOCOLATE FORMULATION WITH CAROB, LOW CAFFEIN AND THEOBROMINE CONTENTS, MILK-FREE, WITHOUT ADDED SUGARS, GLUTEN-FREE, SOY-FREE AND WITH FIBRE**
SCHOKOLADENFORMULIERUNG MIT JOHANNISBROT, NIEDRIGEM KOFFEIN- UND THEOBROMINGEHALT, MILCHFREI, OHNE ZUSÄTZLICHEM ZUCKER, GLUTENFREI, SOJAFREI UND MIT OHNE BALLASTSTOFF
FORMULATION DE CHOCOLAT AVEC CAROUBE À FAIBLES TENEURS EN CAFÉINE ET THÉOBROMINE, SANS LAIT, SANS ADDITION DE SUCRES, SANS GLUTEN, SANS SOJA ET AVEC FIBRES

(30) Priority: 21.08.2015 BR 132015020227
(43) Date of publication of application: 27.06.2018
(73) Proprietor: Carmine Giunti De Oliveira, Luiz, Campina Grande do Sul (BR); Orlandi Giunti Oliveira, Eloisa Helena, Campina Grande do Sul (BR)
(72) Inventor: Carmine Giunti De Oliveira, Luiz, Campina Grande do Sul (BR); Orlandi Giunti Oliveira, Eloisa Helena, Campina Grande do Sul (BR)
(74) Representative: Isern Patentes y Marcas S.L.
(86) International application number: PCT/BR2016/050209
(87) International publication number: WO 2017/031566

(56) References cited:
- WO-A1-2009/001063
- WO-A1-2013/142938
- BR-A2- PI1 000 333
- BR-A2- PI1 000 670
- US-A- 4 011 349
- US-A1- 2011 274 813
- US-B1- 6 521 273
- GOMES, C. R.; ET AL.: 'Influência de diferentes agentes de corpo nas caracteristicas reológicas e sensoriais de chocolates diet em sacarose e light em calorias.' CIêNCIA E TECNOLOGIA DE ALIMENTOS vol. 27, no. 3, July 2007, pages 614 - 623, XP055365944
- MELO, L. L. M. M. DE.: 'Perfil Sensorial como Ferramenta para o Desenvolvimento de Chocolates ao Leite Diet em sacarose e Light em calorias Contendo Substitutos da Sacarose e de Gordura. 2008. 163p. Tese (Doutorado em Ciências de Alimentos' FACULDADE DE ENGENHARIA DE ALIMENTOS, UNIVERSIDADE ESTADUAL DE CAMPINAS, CAMPINAS. XP055515315
- MINIM, V. P. R.: 'Metodologia para determinação de sucedâneos da manteiga de cacau em chocolate. 1996. 207p. Tese (Doutorado em Ciências de Alimentos' FACULDADE DE ENGENHARIA DE ALIMENTOS, UNIVERSIDADE ESTADUAL DE CAMPINAS, CAMPINAS. XP055515327
- EFRAIM, P.: 'Estudo para minimizar as perdas de flavonóides durante a fermentação de sementes de cacau para produção de chocolate.' DISSERTAÇÃO (MESTRADO EM TECNOLOGIA DE ALIMENTOS) - FACULDADE DE ENGENHARIA DE ALIMENTOS, UNIVERSIDADE ESTADUAL DE CAMPINAS, CAMPINAS. 2004, page 110, XP055515339
- MEDEIROS, M. L.; ET AL.: 'Avaliação quimica de substitutos de cacau e estudo sensorial de achocolatados formulados.' CIÊNCIA E TECNOLOGIA DE ALIMENTOS vol. 29, no. 2, April 2009, pages 247 - 253, XP055515345

## Description

The present Patent Application relates to the formulation of chocolate with carob with low caffeine and theobromine content, without milk of animal origin, no added sugars, gluten-free, soy-free and with fibers, in various forms of presentation (tablets, bars, candies, etc.) with cocoa and carob as a base and obtaining food with special nutritional characteristics to serve the segment of consumers with food restrictions due to health problems or the life philosophy (naturalists, bodybuilders, etc.), obtaining attributes of color, odor, and taste characteristic of products based on cocoa and carob.

The formulation disclosed in the patent application PI 1003335-1 of the same inventors brought a new concept of chocolates and alternatives with carob by allying cocoa butter and cocoa liquor with carob and presented excellent results with the following composition:
20 to 45% cocoa butter
5 to 25% carob powder
0 to 25% cocoa liquor
20 to 40% maltitol
0 to 15% maltodextrin
5 to 15% polydextrose
supplemented by lecithin, aromas and sucralose.

Although the product has met the initial assumptions established, in the commercial exploitation of this product it was observed, after further research, that some other options of proportions could also be adopted and with replacement of ingredients could obtain products of better quality and with more appeals nutritional benefits for consumers and meet all allergen restrictions.

"FORMULATION OF CHOCOLATE WITH CAROB WITH LOW CAFFEINE AND TEOBROMINE CONTENT, MILK FREE, NO ADDED SUGAR, GLUTEN FREE, SOY FREE AND WITH FIBERS", the object of the present patent was developed to overcome the inconvenients drawbacks and limitations of the current formulas, since it obtained optimized formulations that maintain cocoa and carob as base, the use of cocoa butter with or without cocoa liquor with optimizations due to new proportions and replacement of ingredients, obtaining food with special nutritional characteristics to serve the segment of consumers with food restrictions, due to health problems or life philosophy (naturalists, bodybuilders, etc.), obtaining attributes of color, odor, and taste characteristic of products based on cocoa and carob.

The present invention is defined by the claims.

In the investigations conducted with some other proportional options compared to that disclosed in patent PI 1003335-1, the following formulations were tested with ingredients, maltodextrin, sucralose, polydextrose and vanilla and gianduia flavorings, are in the form of powders, in percentages by weight:

### TEST No. 1A

Mixture was prepared with 26% carob powder, 29.44% cocoa butter, 4.9% cocoa liquor, 4.9% polydextrose, 14.3% maltodextrin, 19.9% maltitol, 0.4% sunflower lecithin, 0.07% vanilla flavor, 0.05% gianduia flavor and 0.04% sucralose, obtaining a good product, approved by tasters, with color and taste of slightly bitter chocolate, requiring to apply a small percentage of sucralose sweetener because of the increase of liquor. Easy handling and good viscosity.

### TEST No. 2A

Mixture was prepared with 30% carob powder, 34.34% cocoa butter, 0.1% cocoa liquor, 15,1% maltodextrin, 19.9% maltitol, 0.4% sunflower lecithin, 0.07% vanillin flavor, 0.05% gianduia flavor and 0.04% sucralose, obtaining a good product, approved by tasters, color and taste of slightly bitter chocolate. Easy handling, good viscosity. Appeal of fibers and properties present in carob.

### TEST No. 3A

Mixture was prepared with 30% carob powder, 34.44% cocoa butter, 4.9% cocoa liquor, 0.1% polydextrose, 20% maltodextrin, 10% maltitol, 0.4% sunflower lecithin, 0.07% vanilla flavor, 0.05% gianduia flavor and 0.04% sucralose, obtaining a good product, approved by tasters, color and taste of bitter chocolate, requiring an addition of sucralose sweetener. Easy handling, good viscosity. Appeal of fibers and natural properties present in the carob.

### TEST No. 4A

Mixture was prepared with 25.1% carob powder, 34.54% cocoa butter, 4.99% polydextrose, 15% maltodextrin, 19.81% maltitol, 0.4% sunflower lecithin, 0.07% vanilla flavor, 0.05% gianduia flavor and 0.04% sucralose, obtaining a good product, approved by tasters, color and taste of slightly bitter chocolate. Appeal of natural fibers and properties present in the carob. Easy handling and good viscosity. Sweet dough, not requiring artificial sweetener.

### TEST No. 5A

Mixture was prepared with 32.8% carob powder, 31.63% cocoa butter, 0.01% cocoa liquor, 15.1% maltodextrin, 19.9% maltitol, 0.4% sunflower lecithin, 0.07% vanilla flavor, 0.05% gianduia flavor and 0.04% sucralose, yielding a surprisingly optimum result of product with color, taste, odor and viscosity approved by tasters.

### TEST No. 6A

Mixture was prepared with 36% carob powder, 28.43% cocoa butter, 0.01% cocoa liquor, 0.1% polydextrose, 15% maltodextrin, 19.9% maltitol, 0.4% sunflower lecithin, 0.07% vanilla flavor, 0.05% gianduia flavor, and 0.04% sucralose, obtaining a strong, astrictive flavoring dough of the carob, fibrous textured dough, none creamy, not approved by tasters.

### TEST No. 7A

Mixture was prepared with 35% carob powder, 29.34% cocoa butter, 4.1% cocoa liquor, 0.1% polydextrose, 15% maltodextrin, 15.9% maltitol, 4% sunflower lecithin, 0.07% vanilla flavor, 0.05% gianduia flavor and 0.04% sucralose, obtaining a strong carob-flavored dough, a creamy-textured dough, approved by tasters.

### TEST N ° 8A

Mixture was prepared with 35% carob powder, 29.63% cocoa butter, 0.01% cocoa liquor, 4.9% polydextrose, 20% maltodextrin, 9.9% maltitol, 0.4% sunflower lecithin, 0.07% vanilla flavor, 0.05% gianduia flavor and 0.04% sucralose, obtaining a strong, astrictive flavoring dough of the carob, fibrous textured dough, non-creamy, not approved by tasters.

### TEST No. 9A

Mixture was prepared with 30% carob powder, 28.43% cocoa butter, 0.01% cocoa liquor, 0.1% polydextrose, 21% maltodextrin, 19.9% maltitol, 0.4% sunflower lecithin, 0.07% vanilla flavor, 0.05% gianduia flavor and 0.04% sucralose, yielding a hard, fibrous dough, high viscosity dough, non-creamy, not approved by tasters.

With the above tests 1A to 9A an optimized formulation was obtained which contains the following composition:
20 to 45% cocoa butter
25.1 to 35% carob powder
0.01 to 4.99% cocoa liquor
10 to 19.9% maltitol
15.01 to 20% maltodextrin
0 to 4.99% polydextrose
supplemented by 0.4% sunflower lecithin, 0.07% vanilla flavor, 0.05% gianduia flavor and 0.04% sucralose.

The preferred formulation obtained by tests A is as follows:
32.8% carob powder
31.63% cocoa butter
0.01% cocoa liquor
15.0% maltitol
15.1% maltodextrin
4.9% polydextrose
supplemented by 0.4% sunflower lecithin, 0.07% vanillin flavor, 0.05% gianduia flavor and 0.04% sucralose. The results of the sensory tests were color, odor, taste and consistency approved by the tasters.

The nutritional information for 100g of the product with the preferred formula is as follows:
Energy value 461 kcal = 1963 kJ
Carbohydrates 48g, of which:
Sugars 7.7g
Polyols 15g
Starch 0g
Other carbohydrates 23g
Proteins 1.7g
Total Fat 32g
Saturated fats 19g
Trans fats 0g
Monounsaturated Fats 10g
Polyunsaturated fats 1.0g
Cholesterol 0mg
Fiber food 15g
Sodium 27mg

In addition, in relation to the investigations with other proportions in percentage by weight of ingredients disclosed in the patent PI 1003335-1, a smaller amount of carob was studied and investigated in the original formulation of said patent, and it was concluded after practical tests that the carob content may be reduced to a minimum of 3%.

The tests with the lowest carob percentage were:

| INGREDIENTS | % |
|---|---|
| Cocoa butter | 30.00 |
| Cocoa liquor- | |
| Maltitol Sweetener | 35.00 |
| Coconut oil and/or coconut milk | - |
| Carob powder | 2.5 |
| Polydextrose | 15.00 |
| Maltodextrin | 16.94 |
| Sweet potato powder | - |
| Flour and/or Rice extract and/or Powder for the preparation of rice-based beverages | - |
| Sunflower lecithin | 0.40 |
| Aroma identical to the natural one of vanilla | 0.07 |
| Aroma identical to the natural one of gianduia | 0.05 |
| Sucralose | 0.04 |

Result: Dough with good viscosity, suitable for use in all application types in the formatting of chocolate. With odor and taste undefined by the low carob content, being disapproved by the tasters.

| INGREDIENTS | % |
|---|---|
| Cocoa butter | 30.00 |
| Cocoa liquor- | |
| Maltitol Sweetener | 35.00 |
| Coconut oil and/or coconut milk | - |
| Carob powder | 3.00 |
| Polydextrose | 15.00 |
| Maltodextrin | 16.44 |
| Sweet potato powder | - |
| Flour and/or Rice extract and/or Powder for the preparation of rice-based beverages | - |
| Sunflower lecithin | 0.40 |
| Aroma identical to the natural one of vanilla | 0.07 |
| Aroma identical to the natural one of gianduia | 0.05 |
| Sucralose | 0.04 |

Result: Dough with good viscosity, suitable for use in all application types in the formatting of chocolate. With moderate odor and taste of the carob. And although, getting a mild carob flavor, it was approved by tasters.

In the incessant researches conducted with some changes of ingredients the following inventive concepts were considered on the new ingredients tested in relation to that disclosed in the patent PI 1003335-1:
The fat present in ingredients with coconut fats (coconut oil and coconut milk) is rich in antioxidants. In terms of technological application, during the first phase of mixing the ingredients, both coconut oil and coconut milk leave the dough more homogeneous and elastic, mainly, returning the fat lost, due to milk withdrawal. The oil and coconut milk provide a better sensory profile, giving softness and *mouthfeel* to the finished product.

Rice extract in the form of whole following nutritional values for 30g portion: Energy value 114kcal = 479kJ; Carbohydrates, of which: 25g; Sugars 7g; Lactose 0g; Protein 2g; Total Fat, of which: 0g; Saturated 0g; Trans 0g; Monounsaturated 0g; Polyunsaturated 0g; Cholesterol 0mg; and Sodium 45mg.

The powder for the preparation of a rice drink contains in its composition rice, sea salt, anti-insect INS 551 and has the following nutritional values:

| Serving size in 100g | |
|---|---|
| Energy | 388,13Kcal |
| Proteins | 9.90g |
| Carbohydrates | 82.25g |
| Total fat | 2.17g |
| Saturated fat | 0.60g |
| Monounsaturated fat | 0.76g |
| Polyunsaturated fat | 0.81g |
| Trans Fat | 0g |
| Cholesterol | 0g |
| Fibers | 2.2 g |
| Sodium | 237.3mg |
| Calcium | 11.4 mg |
| Potassium | 188.8 mg |
| Iron | 1.33 mg |

Other factors that must be taken into account are the Glycemic Index (I.G.) and the Glycemic Load (C.G.) of the foods. The Glycemic Index only indicates the absorption rate of the carbohydrates regardless of the portion amount. The Glycemic Load does this evaluation taking into account the different amounts and quality of carbohydrates present in the ingredients used.

**Comparison Table of Ingredients**

| | Nutritional Information per 100g | | | |
|---|---|---|---|---|
| | Maltodextrin | Rice Flour | Sweet Powder | Potato |
| Energy value (kcal) | 380.00 | 380.00 | 329.39 | |
| Carbohydrates, of which: (g) | 95.00 | 80.00 | 73.63 | |
| Sugars (g) | 9.00-13.00 | 0.12 | 17.98 | |
| Polyols (g) | 0 | 0 | 0 | |
| Starch (g) | 0 | 79.88 | 55.65 | |
| Other carbohydrates (g) | 82,00-86,00 | 0 | 0 | |
| Proteins (g) | <0.10 | 7.50 | 6.85 | |
| Total Fat (g) | 0 | 0.60 | 0.83 | |
| Saturated fats (g) | 0 | 0.10 | 0 | |
| *Trans* fats (g) | 0 | 0 | 0 | |
| Food fiber (g) | 0 | 0.50 | 9.92 | |
| Sodium (mg) | <100 | 5.00 | 233.30 | |
| Glycemic Index | 100 | - | 44.00 | |

In rice derivatives (flour or rice extract, or powder for the preparation of rice-based beverages), carbohydrates are basically represented by starch, which is formed by amylose and amylopectin chains, responsible for many of the final product properties, the most important being the provision of a natural body for the formulations. The second major component in the structure of flour or rice extract or powder for the preparation of rice-based beverages is the protein, accounting for about 7-9% of its composition. For this reason, the flour or rice extract or powder for the preparation of rice-based beverages are applied to the formulations in replacement to the protein found in the soy extract and also because it does not contain gluten and the food allergens in its composition.

Because sweet potato is a complex carbohydrate with a low glycemic index, that is, its absorption by the body is slower, gradually releasing the glucose into the bloodstream and without greatly stimulating insulin (hormone responsible for increased hunger and fat accumulation), its replacement in formulation brings significant nutritional benefits to the human body.

The sweet potato tuber is rich in fiber, and has source of iron, Vitamins E, A and C and potassium. Sweet potato also has a good amount of calcium, which is much higher than maltodextrin and a much higher amount of fiber than rice flour.

The sweet potato is one of the most popular tubers in Brazil, so the industries have already processed the powdered sweet potato, which has a complex carbohydrate of low glycemic index, rich in fiber, iron, Vitamin C and potassium. The powdered sweet potato provides high vitamin E content and phenolic compounds that act as antioxidant protecting the body from certain chronic diseases like cardiovascular. Due to its low glycemic index, potato flour is a coadjuvant in the diet-therapy treatment of people who need to control sugar consumption, especially of diabetics.

The industries that produce *diet* and *light* foods have widely used in various types of processed foods, the maltodextrin ingredient in replacement to sugars and milk powder derivatives. Rice flour, rice extract, powder for the preparation of rice-based beverages and sweet potato powder are excellent substitutes as a body agent to maintain the greatest possible similarity to the properties of the traditional maltodextrin product, which relates to technological improvements (viscosity and solubility), sensorial aspects such as taste, texture and odor of finished products.

Most recently, the availability of ingredients of carob sugar and coconut sugar that may substitute sweeteners and have a low glycemic index has appeared on the market and, as a result of this, alternative formulas were researched with this new ingredient.

In the incessant researches conducted with some changes of ingredients in relation to that disclosed in the patent PI 1003335-1, the following formulations were tested with ingredients: maltodextrin, sucralose, polydextrose and vanilla and gianduia flavorings, are in the form of powders, in percentages by weight:

### TEST 1B

| INGREDIENTS | % |
|---|---|
| Cocoa butter | 30.00 |
| Cocoa liquor- | |
| Maltitol Sweetener | 35.00 |
| Coconut oil and/or coconut milk | 0.40 |
| carob powder | 10.00 |
| Polydextrose | 12.00 |
| Maltodextrin | 2.04 |
| Sweet potato powder | 5.00 |
| Rice flour | 5.00 |
| Sunflower lecithin | 0.40 |
| Aroma identical to the natural one of vanilla | 0.07 |
| Aroma identical to the natural one of gianduia | 0.05 |
| Sucralose | 0.04 |

Result: Dough with good viscosity, for various application types, but due to the low percentage of Coconut Oil and/or Coconut Milk, the dough did not remain with the desired softness and nutritional appeal. The final product was disapproved by the tasters.

### TEST 2B

| INGREDIENTS | % |
|---|---|
| Cocoa butter | 29.00 |
| Cocoa liquor | 1.00 |
| Maltitol Sweetener | 35.00 |
| Coconut oil and/or coconut milk | 0.50 |
| Carob powder | 10.00 |
| Polydextrose | 12.00 |
| Maltodextrin | 0.94 |
| Sweet potato powder | 6.00 |
| Rice flour | 5.00 |
| Sunflower lecithin | 0.40 |
| Aroma identical to the natural one of vanilla | 0.07 |
| Aroma identical to the natural one of gianduia | 0.05 |
| Sucralose | 0.04 |

Result: Dough with good viscosity, for various application types, final product approved by tasters, as the dough was left with the desired nutritional appeal and expected softness due to the adequate percentage of Coconut Oil and/or Coconut Milk.

### TEST 3B

| INGREDIENTS | % |
|---|---|
| Cocoa butter | 25.00 |
| Cocoa liquor-Maltitol Sweetener | 30.00 |
| Coconut oil and/or coconut milk | 6.00 |
| Carob powder | 10.00 |
| Polydextrose | 12.00 |
| Maltodextrin | 2.44 |
| Sweet potato powder | 9.00 |
| Rice extract | 5.00 |
| Sunflower lecithin | 0.40 |
| Aroma identical to the natural one of vanilla | 0.07 |
| Aroma identical to the natural one of gianduia | 0.05 |
| Sucralose | 0.04 |

Result: Unwanted textured dough for formatting and very sensitive to heat, excellent in application to ice cream toppings. The melting point of the dough is very low. Disapproved by tasters.

### TEST 4-B

| INGREDIENTS | % |
|---|---|
| Cocoa butter | 25.00 |
| Cocoa liquor- | |
| Maltitol Sweetener | 30.00 |
| Coconut oil and/or coconut milk | 5.50 |
| Carob powder | 10.00 |
| Polydextrose | 12.00 |
| Maltodextrin | 2.94 |
| Sweet potato powder | 9.00 |
| Rice extract | 5.00 |
| Sunflower lecithin | 0.40 |
| Aroma identical to the natural one of vanilla | 0.07 |
| Aroma identical to the natural one of gianduia | 0.05 |
| Sucralose | 0.04 |

Result: Moderately soft final product, which can be used for various application types, including chocolate formatting due to its good viscosity and melting point. Approved by tasters.

### TEST 5B

| INGREDIENTS | % |
|---|---|
| Cocoa butter | 30.00 |
| Cocoa liquor-Maltitol Sweetener | 35.00 |
| Coconut oil | 3.00 |
| Carob powder | 10.00 |
| Polydextrose | 12.00 |
| Maltodextrin | 2.94 |
| Sweet potato powder | 5.00 |
| Rice flour and/or Powder for the preparation of rice-based beverages | 1.50 |
| Soy lecithin | 0.40 |
| Aroma identical to the natural one of vanilla | 0.07 |
| Aroma identical to the natural one of gianduia | 0.05 |
| Sucralose | 0.04 |

Result: Dough with good viscosity, taste and melting point, for several application types, but disapproved by tasters due to the sensorial profile (*mouthfeel*) by the low percentage of rice flour.

### TEST 6B

| INGREDIENTS | % |
|---|---|
| Cocoa butter | 28.50 |
| Cocoa liquor | 1.50 |
| Maltitol Sweetener | 35.00 |
| Coconut milk | 2.00 |
| carob powder | 10.00 |
| Polydextrose | 12.00 |
| Maltodextrin | 1.44 |
| Sweet potato powder | 7.00 |
| Flour and/or Rice Extract and/or Powder for the preparation of rice-based beverages | 2.00 |
| Sunflower lecithin | 0.40 |
| Aroma identical to the natural one of vanilla | 0.07 |
| Aroma identical to the natural one of gianduia | 0.05 |
| Sucralose | 0.04 |

Result: Dough with good viscosity, soft, and good melting point, and can be used for various application types, making use of rice be noted giving a differential in the dough, approved by tasters.

### TEST 7B

| INGREDIENTS | % |
|---|---|
| Cocoa butter | 28.00 |
| Cocoa liquor | 2.00 |
| Maltitol Sweetener | 30.00 |
| Coconut milk | 5.00 |
| carob powder | 10.00 |
| Polydextrose | 2.94 |
| Sweet potato powder | 0.50 |
| Flour and/or Rice Extract and/or Powder for the preparation of rice-based beverages | 21.00 |
| Sunflower lecithin | 0.40 |
| Aroma identical to the natural one of vanilla | 0.07 |
| Aroma identical to the natural one of gianduia | 0.05 |
| Sucralose | 0.04 |

Result: Rigid, sandy dough with a strong rice taste (viscosity), dough with difficulty in the refining process, non-standard sweetness, disapproved by tasters.

### TEST 8B

| INGREDIENTS | % |
|---|---|
| Cocoa butter | 23.95 |
| Cocoa liquor | 2.00 |
| Maltitol sweetener | 30.00 |
| Coconut oil | 5.00 |
| carob powder | 10.00 |
| Polydextrose | 4.23 |
| Sweet potato powder | 4.26 |
| Flour and/or Rice Extract and/or Powder for the preparation of rice-based beverages | 20.00 |
| Soy lecithin | 0.40 |
| Aroma identical to the natural one of vanilla | 0.07 |
| Aroma identical to the natural one of gianduia | 0.05 |
| Sucralose | 0.04 |

Result: Dough with acceptable viscosity, for several application types, including in the baking area even with a high percentage of rice, approved by the tasters.

### TEST 9B

| INGREDIENTS | % |
|---|---|
| Cocoa butter | 28.00 |
| Cocoa liquor | 2.00 |
| Maltitol sweetener | 25.00 |
| Coconut milk | 2.00 |
| carob powder | 10.00 |
| Polydextrose | 15.00 |
| Maltodextrin | 5.94 |
| Sweet potato powder | 1.50 |
| Powder for the preparation of rice-based beverages | 10.00 |
| Sunflower lecithin | 0.40 |
| Aroma identical to the natural one of vanilla | 0.07 |
| Aroma identical to the natural one of gianduia | 0.05 |
| Sucralose | 0.04 |

Result: Dough with good viscosity, for various application types, but due to the low percentage of sweet potato powder, the final product was without the desired nutritional appeal, being disapproved by the tasters.

### TEST 10B

| INGREDIENTS | % |
|---|---|
| Cocoa butter | 28.50 |
| Cocoa liquor | 1.50 |
| Maltitol sweetener | 25.00 |
| Coconut oil | 1.50 |
| carob powder | 10.00 |
| Polydextrose | 15.00 |
| Maltodextrin | 5.94 |
| Sweet potato powder | 2.00 |
| Rice extract | 10.00 |
| Sunflower lecithin | 0.40 |
| Aroma identical to the natural one of vanilla | 0.07 |
| Aroma identical to the natural one of gianduia | 0.05 |
| Sucralose | 0.04 |

Result: Dough with good viscosity, for various application types, final product approved by the tasters, because the dough has the desired nutritional appeal.

### TEST 11B

| INGREDIENTS | % |
|---|---|
| Cocoa butter | 29.00 |
| Cocoa liquor | 1.00 |
| Maltitol sweetener | 30.00 |
| Coconut milk | 1.00 |
| carob powder | 10.00 |
| Polydextrose | 3.44 |
| Maltodextrin - Sweet potato powder | 25.00 |
| Flour and/or Rice Extract and/or Powder for the preparation of rice-based beverages - Sunflower lecithin | 0.40 |
| Aroma identical to the natural one of vanilla | 0.07 |
| Aroma identical to the natural one of gianduia | 0.05 |
| Sucralose | 0.04 |

Result: Unwanted textured dough (Viscosity) for formatting, fibrous and hard with difficulty in the refining process, disapproved by tasters.

### TEST 12B

| INGREDIENTS | % |
|---|---|
| Cocoa butter | 29.00 |
| Cocoa liquor | 1.00 |
| Maltitol sweetener | 30.00 |
| Coconut oil | 1.00 |
| carob powder | 10.00 |
| Polydextrose | 4.44 |
| Maltodextrin - Sweet potato powder | 24.00 |
| Flour and/or Rice Extract and/or Powder for the preparation of rice-based beverages - Sunflower lecithin | 0.40 |
| Aroma of vanilla | 0.07 |
| Aroma of gianduia | 0.05 |
| Sucralose | 0.04 |

Result: Dough with good viscosity and melting point having the refining process solved with the not so rigid dough, acceptable taste and aroma similar to our existing dough. Approved by tasters.

### TEST 13B

| INGREDIENTS | % |
|---|---|
| Cocoa butter | 29.00 |
| Cocoa liquor- | |
| Maltitol sweetener | 10.00 |
| Coconut milk | 1.00 |
| carob powder | 10.00 |
| Polydextrose | 20.00 |
| Maltodextrin | 5.44 |
| Sweet potato powder | 24.00 |
| Flour and/or Rice Extract and/or Powder for the preparation of rice-based beverages - Sunflower lecithin | 0.40 |
| Aroma of vanilla | 0.07 |
| Aroma of gianduia | 0.05 |
| Sucralose | 0.04 |

Result: Dough with good viscosity for various application types. With content of sweetness approved by tasters.

### TEST 14B

| INGREDIENTS | % |
|---|---|
| Cocoa butter | 29.00 |
| Cocoa liquor-Maltitol sweetener | 10.00 |
| Coconut oil | 1.00 |
| carob powder | 10.00 |
| Polydextrose | 20.00 |
| Maltodextrin | 9.26 |
| Sweet potato powder - Rice flour | 20.00 |
| Sunflower lecithin | 0.40 |
| Aroma of vanilla | 0.07 |
| Aroma of gianduia | 0.05 |
| Sucralose | 0.04 |

Result: Good viscosity dough for various application types. With content of sweetness approved by tasters.

Alternatively, the use of sugars with low glycemic index (carob sugar and/or coconut sugar) was tested in Maltitol replacement and the amounts were found to be equivalent, according to tests 15 to 18 below:

### TEST 15B

| INGREDIENTS | % |
|---|---|
| Cocoa butter | 30.00 |
| Cocoa liquor- | |
| carob Sugar and/or Coconut Sugar | 41.00 |
| Coconut oil and/or Coconut milk | 0.50 |
| carob powder | 10.00 |
| Polydextrose | 6.00 |
| Maltodextrin | 1.98 |
| Sweet potato powder | 5.00 |
| Rice flour | 5.00 |
| Sunflower lecithin | 0.40 |
| Aroma identical to the natural one of vanilla | 0.07 |
| Aroma identical to the natural one of gianduia | 0.05 |

Result: Dough with good viscosity, for various application types, however the dough did not remain with desired sweetness and the desired nutritional appeal. The final product was disapproved by the tasters.

### TEST 16

| INGREDIENTS | % |
|---|---|
| Cocoa butter | 29.00 |
| Cocoa liquor | 1.00 |
| carob Sugar and/or Coconut Sugar | 40.00 |
| Coconut oil and/or Coconut milk | 0.50 |
| carob powder | 10.00 |
| Polydextrose | 7.00 |
| Maltodextrin | 0.98 |
| Sweet potato powder | 6.00 |
| Rice flour | 5.00 |
| Sunflower lecithin | 0.40 |
| Aroma identical to the natural one of vanilla | 0.07 |
| Aroma identical to the natural one of gianduia | 0.05 |
| Sucralose | 0.04 |

Result: Dough with good viscosity, for various application types, final product approved by the tasters, because the dough has the desired nutritional appeal and sweetness desired, but can not use the "No added sugars" appeal.

### TEST 17B

| INGREDIENTS | % |
|---|---|
| Cocoa butter | 29.00 |
| Cocoa liquor- | |
| carob Sugar and/or Coconut Sugar | 9.00 |
| Coconut oil and/or Coconut milk | 1.00 |
| carob powder | 10.00 |
| Polydextrose | 20.00 |
| Maltodextrin 6.48 | |
| Sweet potato powder | 24.00 |
| Flour and/or Rice Extract and/or Powder for the preparation of rice-based beverages | - |
| Sunflower lecithin | 0.40 |
| Aroma of vanilla | 0.07 |
| Aroma of gianduia | 0.05 |
| Sucralose | 0.04 |

Result: Good viscosity dough for various application types. With sweetness content disapproved by tasters.

### TEST 18 B

| INGREDIENTS | % |
|---|---|
| Cocoa butter | 29.00 |
| Cocoa liquor- | |
| carob Sugar and/or Coconut Sugar | 10.00 |
| Coconut oil and/or Coconut milk | 1.00 |
| carob powder | 10.00 |
| Polydextrose | 20.00 |
| Maltodextrin 9.30 | |
| Sweet potato powder | - |
| Flour and/or Rice Extract and/or Powder for the preparation of rice-based beverages | 20.00 |
| Sunflower lecithin | 0.40 |
| Aroma of vanilla | 0.07 |
| Aroma of gianduia | 0.05 |

Result: Good viscosity dough for various application types. With sweetness content approved by the tasters, but can not use the "No added sugars" appeal.

In the researches carried out by the tests 1B to 18B mentioned it was observed that when using the ingredients with the presence of coconut fats (coconut oil or coconut milk), rice derivatives (flour or rice extract or powder for the preparation of rice-based beverages) and,sweet potato powder and sugars with low glycemic index (carob sugar or coconut sugar) there are minimum amounts to take effect and give results, which are:
Minimum 0.5% of ingredient with coconut fats (coconut oil or coconut milk);
Minimum of 2.0% of rice derivatives (flour or rice extract or powder for the preparation of rice-based beverages); and
Minimum 2% of sweet potato powder; and
Minimum 10% sugars with low glycemic index (carob sugar or coconut sugar).

The maximum amount of rice derivatives (flour or rice extract or powder for the preparation of rice-based beverages) has been tested which can be used with the maximum amount of sweet potato powder without having problems of excess body agent, with the following results:
TEST 19B, with Maltitol 10% and maximum of rice derivatives (flour and/or extract and/or powder for the preparation of rice-based beverages) and sweet potato powder.

| INGREDIENTS | % |
|---|---|
| Cocoa butter | 29.00 |
| Cocoa liquor- | |
| Maltitol sweetener | 10.00 |
| Coconut milk | 1.00 |
| carob powder | 10.00 |
| Polydextrose | 5.44 |
| Maltodextrin | - |
| Sweet potato powder | 24.00 |
| Rice extract | 20.00 |
| Sunflower lecithin | 0.40 |
| Aroma of vanilla | 0.07 |
| Aroma of gianduia | 0.05 |
| Sucralose | 0.04 |

Result: Good viscosity dough for various application types. With odor and taste characteristic of bitter chocolate. Approved by tasters.

With the above-mentioned tests 1B to 19B an optimized formulation was obtained which contains the following composition with the "No added sugars" appeal:
20 to 45% cocoa butter;
0 to 5.5% ingredient with coconut fat (coconut oil and/or coconut milk);
3 to 35% carob powder;
0 to 25% cocoa liquor;
10 to 40% maltitol;
0 to 20% maltodextrin;
0 to 20% of rice derivative (flour and/or extract and/or powder for the preparation of rice-based beverages);
0 to 24% of sweet potato powder;
0 to 15% polydextrose;
supplemented by 0.4% sunflower lecithin, 0.07% vanilla flavor, 0.05% gianduia flavor and 0.04% sucralose.

Alternatively, with the above-mentioned tests 1B to 19B, an optimized formulation was obtained which contains the following composition without the "No added sugars" appeal:
20 to 45% cocoa butter;
0 to 5.5% ingredient with coconut fat (coconut oil and/or coconut milk);
3 to 35% carob powder;
0 to 25% cocoa liquor;
10 to 40% sugar with high glycemic index (carob sugar and/or coconut sugar);
0 to 20% maltodextrin;
0 to 20% of rice derivative (flour and/or extract and/or powder for the preparation of rice-based beverages);
0 to 24% of sweet potato powder;
0 to 15% polydextrose;
supplemented by 0.4% sunflower lecithin, 0.07% vanilla flavor and 0.05% gianduia flavor.

The preferred formulation with the "No added sugars" appeal obtained by tests B is the following:
Preferred formulation with liquor:

| | |
|---|---|
| Cocoa butter: | 24.00% |
| Maltitol sweetener powder: | 20.00% |
| Coconut oil: | 1.00% |
| carob powder: | 7.00% |
| Polydextrose: | 6.44% |
| Maltodextrin: | - |
| Rice flour: | 15.00% |
| Sweet potato powder: | 14.00% |
| Cocoa liquor: | 12.00% |
| Sunflower lecithin emulsifier: | 0.40% |
| Aroma identical to the natural one of vanilla: | 0.07% |
| Sucralose Sweetener: | 0.04% |
| Aroma identical to the natural one of gianduia: | 0.05% |
| Preferred formulation without liquor: | |
| Cocoa butter: | 30.00% |
| Maltitol sweetener powder: | 20.00% |
| Coconut oil: | 1.00% |
| carob powder: | 10.00% |
| Polydextrose: | 9.44% |
| Maltodextrin: | - |
| Rice flour: | 15.00% |
| Sweet potato powder: | 14.00% |
| Cocoa liquor: | - |
| Sunflower lecithin emulsifier: | 0.40% |
| Aroma identical to the natural one of vanilla: | 0.07% |
| Sucralose Sweetener: | 0.04% |
| Aroma identical to the natural one of gianduia: | 0.05% |

The result of the sensory tests with the call "without addition of sugars " were of color, odor, flavor and consistency approved by tasters.

The nutritional information of the product with "No added sugars" appeal with the preferred formula is as follows:
Nutritional information of the preferred formulation with cocoa liquor:

| | |
|---|---|
| Energy value 476 kcal = 1999 kJ | |
| Carbohydrates 50g, of which: | |
| Sugars | 5.2g |
| Polyols | 20g |
| Starch | 22g |
| Other carbohydrates | 2.3g |
| Proteins | 3.6g |
| Total fat | 32g |
| Saturated fat | 19g |
| Trans fats | 0g |
| Monounsaturated fats | 10g |
| Polyunsaturated fats | 1.0g |
| Cholesterol | 0mg |
| Food Fiber | 11 g |
| Sodium | 37mg |

Nutritional information of the preferred formulation without cocoa liquor:

| | |
|---|---|
| Energy value 467 kcal = 1961 kJ | |
| Carbohydrates 49g, of which: | |
| Sugars | 6.4g |
| Polyols | 20g |
| Starch | 19g |
| Other carbohydrates | 3.2g |
| Proteins | 2.3g |
| Total fat | 32g |
| Saturated fat | 19g |
| Trans fats | 0g |
| Monounsaturated fats | 10g |
| Polyunsaturated fats | 1.0g |
| Cholesterol | 0mg |
| Food Fiber | 13g |
| Sodium | 37mg |

The preferred formulation without the "No added sugars" appeal obtained by tests is the following:
Preferred formulation with cocoa liquor:

| | |
|---|---|
| Cocoa butter: | 25.00% |
| Rice extract: | 15.00% |
| carob powder: | 7.00% |
| Coconut sugar: | 33.00% |
| Sweet potato powder: | 9.48% |
| Cocoa liquor: | 10.00% |
| Sunflower lecithin emulsifier: | 0.40% |
| Aroma identical to the natural one of vanilla: | 0.07% |
| Aroma identical to the natural one of gianduia: | 0.05% |
| Preferred formulation without cocoa liquor: | |
| Cocoa butter: | 30.00% |
| Rice extract: | 15.00% |
| carob powder: | 15.00% |
| carob sugar: | 30.00% |
| Sweet potato powder: | 9.48% |
| Sunflower lecithin emulsifier: | 0.40% |
| Aroma identical to the natural one of vanilla: | 0.07% |
| Aroma identical to the natural one of gianduia: | 0.05% |

The result of the sensory tests with the call "with addition of sugars "were of color, odor, flavor and consistency approved by tasters.

The nutritional information of the product without "No added sugars" appeal with the preferred formula is as follows:
Nutritional information of the preferred formulation with cocoa liquor:

| | |
|---|---|
| Energy value 527 kcal = 2213 kJ | |
| Carbohydrates 59g, of which: | |
| Sugars | 37g |
| Polyols | 0g |
| Starch | 19g |
| Other carbohydrates | 2.3g |
| Proteins | 3.1g |
| Total fat | 31g |
| Saturated fat | 18g |
| Trans fats | 0g |
| Monounsaturated fats | 10g |
| Polyunsaturated fats | 1.0g |
| Cholesterol | 0mg |
| Food Fiber | 4.4g |
| Sodium | 69mg |

Nutritional information of the preferred formulation without cocoa liquor:

| | |
|---|---|
| Energy value 521 kcal = 2188 kJ | |
| Carbohydrates 59g, of which: | |
| Sugars | 37g |
| Polyols | 0g |
| Starch | 17g |
| Other carbohydrates | 4.8g |
| Proteins | 2.3g |
| Total fat | 31g |
| Saturated fat | 18g |
| Trans fats | 0g |
| Monounsaturated fats | 9.9g |
| Polyunsaturated fats | 1.0g |
| Cholesterol | 0mg |
| Food Fiber | 4.7g |
| Sodium | 27mg |

## Claims

1. Chocolate formulation with carob, low caffeine and theobromine contents, milk-free, no added sugar, gluten-free, soy-free and with fibre with 0.4% sunflower lecithin, 0.07% of vanilla flavor, 0.05% gianduia flavor and 0.04% sucralose, **characterized by**, complementation with: 20 to 45% cocoa butter; up to 5.5% ingredient with coconut fat; 3 to 35% Carob powder; 0 to 25% cocoa liquor; 10 to 40% maltitol; 0 to 20% maltodextrin; up to 20% of rice derivative; up to 24% of sweet potato powder; and up to 15% polydextrose.

2. Chocolate formulation with carob, low caffeine and theobromine contents, milk-free, no added sugar, gluten-free, soy-free and with fibre, according to claim 1, **characterized by**, preferred formulation with cocoa liquor with complementation of: cocoa butter: 24.00%; maltitol sweetener powder: 20.00%; coconut oil: 1.00%; carob powder: 7.00%; polydextrose: 6.44%; without maltodextrin; rice flour: 15.00%; sweet potato powder: 14.00%; cocoa liquor: 12.00%; sunflower lecithin emulsifier: 0.40%; aroma identical to the natural one of vanilla: 0.07%; sucralose sweetener: 0.04%; aroma identical to the natural one of gianduia: 0.05%.

3. Chocolate formulation with carob, low caffeine and theobromine contents, milk-free, no added sugar, gluten-free, soy-free and with fibre, according to claim 1, **characterized by**, preferred formulation without cocoa liquor with complementation of: cocoa butter: 30.00%; maltitol sweetener powder: 20.00%; coconut oil:1.00%; carob powder: 10.00%; polydextrose: 9.44%; without maltodextrin; rice flour: 15.00%; sweet potato powder: 14.00%; without cocoa liquor; sunflower lecithin emulsifier: 0.40%; aroma identical to the natural one of vanilla: 0.07%; sucralose sweetener: 0.04%; aroma identical to the natural one of gianduia: 0.05%.

4. Chocolate formulation with carob, low caffeine and theobromine contents, milk-free, no added sugar, gluten-free, soy-free and with fibre, according to claim 1, **characterized in that** the ingredient with coconut fat is selected from coconut oil and coconut milk or a mixture thereof.

5. Chocolate formulation with carob, low caffeine and theobromine contents, milk-free, no added sugar, gluten-free, soy-free and with fibre, according to claim 1, **characterized in that** the rice derivative is chosen from rice flour, powdered water-soluble rice extract and powder for rice-based food preparation or mixture thereof.

6. Chocolate formulation with carob, low caffeine and theobromine contents, milk-free, no added sugar, gluten-free, soy-free and with fibre, according to claim 1, **characterized in that**, alternatively, the formulation is supplemented with: 20 to 45% cocoa butter; 25.1 to 35% carob powder; 0.01 to 4.99% cocoa liquor; 10 to 19.9% maltitol; 15.01 to 20% maltodextrin; and up to 4.99% polydextrose.

7. Chocolate formulation with carob, low caffeine and theobromine contents, milk-free, no added sugar, gluten-free, soy-free and with fibre, according to claim 1, **characterized in that**, alternatively, the preferred formulation is supplemented with: 32.80% locust powder; 31.63% cocoa butter; 0.01% cocoa liquor; 15.00% maltitol; 15.10% maltodextrin; and 4.90% polydextrose.

8. Chocolate formulation with carob, low caffeine and theobromine contents, milk-free, no added sugar, gluten-free, soy-free and with fibre, with 0.4% sunflower lecithin, 0.07% vanilla flavor and 0.05% gianduia flavors, **characterized in that** the formulation is supplemented with: 20 to 45% cocoa butter; up to 5.5% ingredient with coconut fat; 3 to 35% carob powder; up to 25% cocoa liquor; 10 to 40% sugars with high glycemic index; up to 20% maltodextrin; up to 20% of rice derivatives; up to 24% of sweet potato powder; and up to 15% polydextrose.

9. Chocolate formulation with carob, low caffeine and theobromine contents, milk-free, no added sugar, gluten-free, soy-free and with fibre, according to claim 8, **characterized in that** the coconut fat ingredient is chosen from coconut oil and coconut milk or mixtures thereof.

10. Chocolate formulation with carob, low caffeine and theobromine contents, milk-free, no added sugar, gluten-free, soy-free and with fibre, according to claim 8, **characterized in that** the sugar with low glycemic index is selected from locust sugar and coconut sugar or mixtures thereof.

11. Chocolate formulation with carob, low caffeine and theobromine contents, milk-free, no added sugar, gluten-free, soy-free and with fibre, according to claim 8, **characterized in that** the rice derivative is chosen from the rice flour, water-soluble rice extract in powder and powder for preparation of rice-based food or mixture thereof.

12. Chocolate formulation with carob, low caffeine and theobromine contents, milk-free, no added sugar, gluten-free, so-free and with fibre, according to claim 8, **characterized by**, preferred formulation with cocoa liquor, with the complementation of: cocoa butter: 25.00%; rice extract: 15.00%; locust powder: 7.00%; coconut sugar: 33.00%; sweet potato powder: 9.48%; cocoa liquor: 10.00%; sunflower lecithin emulsifier: 0.40%; aroma identical to the natural one of vanilla: 0.07%; aroma identical to the natural one of gianduia:0.05%.

13. Chocolate formulation with carob, low caffeine and theobromine contents, milk-free, no added sugar, gluten-free, soy-free and with fibre, according to claim 8, **characterized by**, preferred formulation without cocoa liquor, with the complementation of: cocoa butter: 30.00%; rice extract: 15.00%; locust powder: 15.00%; locust sugar: 30.00%; sweet potato powder: 9.48%; sunflower lecithin emulsifier: 0.40%; aroma identical to the natural one of vanilla: 0.07%; aroma identical to the natural one of gianduia: 0.05%.

## Patentansprüche

1. Schokoladenformulierung mit Johannisbrot, geringem Koffein- und Theobromingehalt, milchfrei, ohne Zuckerzusatz, glutenfrei, sojafrei und mit Ballaststoffen mit 0,4% Sonnenblumenlecithin, 0,07 % Vanillearoma, 0,05 % Gianduia-Aroma und 0,04 % Sucralose, **gekennzeichnet durch** die Ergänzung von: 20 bis 45 % Kakaobutter; bis zu 5,5 % der Zutaten mit Kokosfett; 3 bis 35 % Johannisbrotpulver; 0 bis 25 % Kakaomasse; 10 bis 40% Maltit; 0 bis 20 % Maltodextrin; bis zu 20 % Reisderivat; bis zu 24 % Süßkartoffelpulver; und bis zu 15 % Polyextrose.

2. Schokoladenformulierung mit Johannisbrot, geringem Koffein- und Theobromingehalt, milchfrei, ohne Zuckerzusatz, glutenfrei, sojafrei und mit Ballaststoffen nach Anspruch 1, **gekennzeichnet durch** die bevorzugte Formulierung mit Kakaomasse mit der Ergänzung von: Kakaobutter: 24,00 %; Maltit-Süßstoffpulver: 20,00 %; Kokosöl: 1,00 %; Johannisbrotpulver: 7,00 %; Polydextrose: 6,44 %; ohne Maltodextrin; Reismehl: 15,00 %; Süßkartoffelpulver: 14,00 %; Kakaomasse: 12,00 %; Sonnenblumen-Lecithin-Emulgator: 0,40%; Aroma identisch mit dem natürlichen von Vanille: 0,07 %; Sucralose-Süßstoff: 0,04 %; Aroma identisch mit dem natürlichen von Gianduia: 0,05 %.

3. Schokoladenformulierung mit Johannisbrot, geringem Koffein- und Theobromingehalt, milchfrei, ohne Zuckerzusatz, glutenfrei, sojafrei und mit Ballaststoffen nach Anspruch 1, **gekennzeichnet durch** die bevorzugte Formulierung ohne Kakaomasse mit der Ergänzung von: Kakaobutter: 30,00 %; Maltit-Süßstoffpulver: 20,00 %; Kokosöl: 1,00 %; Johannisbrotpulver: 10,00 %; Polydextrose: 9,44 %; ohne Maltodextrin; Reismehl: 15,00 %; Süßkartoffelpulver: 14,00 %; ohne Kakaomasse; Sonnenblumen-Lecithin-Emulgator: 0,40 %; Aroma identisch mit dem natürlichen von Vanille: 0,07 %; Sucralose-Süßstoff: 0,04 %; Aroma identisch mit dem natürlichen von Gianduia: 0,05 %.

4. Schokoladenformulierung mit Johannisbrot, geringem Koffein- und Theobromingehalt, milchfrei, ohne Zuckerzusatz, glutenfrei, sojafrei und mit Ballaststoffen nach Anspruch 1, **dadurch gekennzeichnet, dass** die Zutat mit Kokosfett ausgewählt ist aus Kokosöl und Kokosmilch oder einer Mischung davon.

5. Schokoladenformulierung mit Johannisbrot, geringem Koffein- und Theobromingehalt, milchfrei, ohne Zuckerzusatz, glutenfrei, sojafrei und mit Ballaststoffen nach Anspruch 1, **dadurch gekennzeichnet, dass** das Reisderivat ausgewählt ist aus Reismehl, gepulvertem wasserlöslichen Reisextrakt und Pulver zur Lebensmittelzubereitung auf Reisbasis oder einer Mischung davon.

6. Schokoladenformulierung mit Johannisbrot, geringem Koffein- und Theobromingehalt, milchfrei, ohne Zuckerzusatz, glutenfrei, sojafrei und mit Ballaststoffen nach Anspruch 1, **dadurch gekennzeichnet, dass** alternativ die Formulierung ergänzt wird durch: 20 bis 45 % Kakaobutter; 25,1 bis 35 % Johannisbrotpulver; 0,01 bis 4,99 % Kakaomasse; 10 bis 19,9% Maltit; 15,01 bis 20% Maltodextrin; und bis zu 4,99% Polydextrose.

7. Schokoladenformulierung mit Johannisbrot, geringem Koffein- und Theobromingehalt, milchfrei, ohne Zuckerzusatz, glutenfrei, sojafrei und mit Ballaststoffen nach Anspruch 1, **dadurch gekennzeichnet, dass** alternativ die bevorzugte Formulierung ergänzt wird durch: 32,80% Akazienpulver; 31,63% Kakaobutter; 0,01 % Kakaomasse; 15,00 % Maltitol; 15,10 % Maltodextrin; und 4,90 % Polydextrose.

8. Schokoladenformulierung mit Johannisbrot, geringem Koffein- und Theobromingehalt, milchfrei, ohne Zuckerzusatz, glutenfrei, sojafrei und mit Ballaststoffen mit 0,4% Sonnenblumenlecithin, 0,07% Vanillearoma und 0,05% Gianduia-Aromen, **dadurch gekennzeichnet, dass** die Formulierung ergänzt wird durch: 20 bis 45 % Kakaobutter; bis zu 5,5 % der Zutaten mit Kokosfett; 3 bis 35 % Johannisbrotpulver; bis zu 25 % Kakaomasse; 10 bis 40 % Zucker mit hohem glykämischen Index; bis zu 20 % Maltodextrin; bis zu 20 % Reisderivate; bis zu 24 % Süßkartoffelpulver; und bis zu 15 % Polyextrose.

9. Schokoladenformulierung mit Johannisbrot, geringem Koffein- und Theobromingehalt, milchfrei, ohne Zuckerzusatz, glutenfrei, sojafrei und mit Ballaststoffen nach Anspruch 8, **dadurch gekennzeichnet, dass** die Kokosfettzutat aus Kokosöl und Kokosmilch oder Mischungen davon ausgewählt ist.

10. Schokoladenformulierung mit Johannisbrot, geringem Koffein- und Theobromingehalt, milchfrei, ohne Zuckerzusatz, glutenfrei, sojafrei und mit Ballaststoffen nach Anspruch 8, **dadurch gekennzeichnet, dass** der Zucker mit niedrigem glykämischen Index aus Akazienzucker und Kokoszucker oder Mischungen davon ausgewählt wird.

11. Schokoladenformulierung mit Johannisbrot, geringem Koffein- und Theobromingehalt, milchfrei, ohne Zuckerzusatz, glutenfrei, sojafrei und mit Ballaststoffen nach Anspruch 8, **dadurch gekennzeichnet, dass** das Reisderivat ausgewählt ist aus Reismehl, wasserlöslichem Reisextrakt in Pulverform und Pulver zur Herstellung von Lebensmitteln auf Reisbasis oder einer Mischung davon.

12. Schokoladenformulierung mit Johannisbrot, geringem Koffein- und Theobromingehalt, milchfrei, ohne Zuckerzusatz, glutenfrei, sojafrei und mit Ballaststoffen nach Anspruch 8, **gekennzeichnet durch** die bevorzugte Formulierung mit Kakaomasse mit der Ergänzung von: Kakaobutter: 25,00 %; Reisextrakt: 15,00 %; Akazienpulver: 7,00 %; Kokoszucker: 33,00 %; Süßkartoffelpulver: 9,48 %; Kakaomasse: 10,00 %; Sonnenblumen-Lecithin-Emulgator: 0,40 %; Aroma identisch mit dem natürlichen von Vanille: 0,07 %; Aroma identisch mit dem natürlichen von Gianduia: 0,05 %.

13. Schokoladenformulierung mit Johannisbrot, geringem Koffein- und Theobromingehalt, milchfrei, ohne Zuckerzusatz, glutenfrei, sojafrei und mit Ballaststoffen nach Anspruch 8, **gekennzeichnet durch** die bevorzugte Formulierung ohne Kakaomasse mit der Ergänzung von: Kakaobutter: 30,00 %; Reisextrakt: 15,00 %; Akazienpulver: 15,00 %; Akazienzucker: 30,00 %; Süßkartoffelpulver: 9,48 %; Sonnenblumen-Lecithin-Emulgator: 0,40 %; Aroma identisch mit dem natürlichen von Vanille: 0,07 %; Aroma identisch mit dem natürlichen von Gianduia: 0,05 %.

## Revendications

1. Formulation chocolatée avec de la caroube, des faibles teneurs en caféine et en théobromine, sans lait, sans sucre ajouté, sans gluten, sans soja et avec des fibres avec 0,4 % de lécithine de tournesol, 0,07 % d'arôme vanille, 0,05 % d'arôme gianduia et 0,04 % de sucralose, **caractérisée par**, une complémentation avec : 20 à 45 % de beurre de cacao ; jusqu'à 5,5 % d'ingrédients avec de la graisse de coco ; 3 à 35 % de poudre de caroube ; 0 à 25 % de liqueur de cacao ; 10 à 40 % de maltitol ; 0 à 20 % de maltodextrine ; jusqu'à 20 % de dérivé de riz ; jusqu'à 24 % de poudre de patate douce ; et jusqu'à 15 % de polydextrose.

2. Formulation chocolatée avec de la caroube, des faibles teneurs en caféine et en théobromine, sans lait, sans sucre ajouté, sans gluten, sans soja et avec des fibres, selon la revendication 1, **caractérisée par**, une formulation préférée avec de la liqueur de cacao avec une complémentation de : beurre de cacao : 24,00 % ; poudre d'édulcorant maltitol : 20,00 % ; huile de coco : 1,00 % ; poudre de caroube : 7,00 % ; polydextrose : 6,44 % ; sans maltodextrine ; farine de riz : 15,00 % ; poudre de patate douce: 14,00 % ; liqueur de cacao: 12,00 % ; émulsifiant de lécithine de tournesol : 0,40 % ; arôme identique à l'arôme naturel de vanille : 0,07 % ; édulcorant sucralose : 0,04 % ; arôme identique à l'arôme naturel de gianduia : 0,05 %.

3. Formulation chocolatée avec de la caroube, des faibles teneurs en caféine et en théobromine, sans lait, sans sucre ajouté, sans gluten, sans soja et avec des fibres, selon la revendication 1, **caractérisée par**, une formulation préférée sans liqueur de cacao avec une complémentation de : beurre de cacao : 30,00 % ; poudre d'édulcorant maltitol : 20,00 % ; huile de coco : 1,00 % ; poudre de caroube : 10,00 % ; polydextrose : 9,44 % ; sans maltodextrine ; farine de riz : 15,00 % ; poudre de patate douce : 14,00 % ; sans liqueur de cacao ; émulsifiant de lécithine de tournesol : 0,40 % ; arôme identique à l'arôme naturel de vanille : 0,07 % ; édulcorant sucralose : 0,04 % ; arôme identique à l'arôme naturel de gianduia : 0,05 %.

4. Formulation chocolatée avec de la caroube, des faibles teneurs en caféine et en théobromine, sans lait, sans sucre ajouté, sans gluten, sans soja et avec des fibres, selon la revendication 1, **caractérisée en ce que** l'ingrédient avec de la graisse de coco est choisi parmi l'huile de coco et le lait de coco ou un mélange de ceux-ci.

5. Formulation chocolatée avec de la caroube, des faibles teneurs en caféine et en théobromine, sans lait, sans sucre ajouté, sans gluten, sans soja et avec des fibres, selon la revendication 1, **caractérisée en ce que** le dérivé de riz est choisi parmi la farine de riz, l'extrait de riz soluble dans l'eau pulvérulent et la poudre pour préparation alimentaire à base de riz ou un mélange de ceux-ci.

6. Formulation chocolatée avec de la caroube, des faibles teneurs en caféine et en théobromine, sans lait, sans sucre ajouté, sans gluten, sans soja et avec des fibres, selon la revendication 1, **caractérisée en ce que**, alternativement, la formulation est complétée par : 20 à 45 % de beurre de cacao ; 25,1 à 35 % de poudre de caroube ; 0,01 à 4,99 % de liqueur de cacao ; 10 à 19,9 % de maltitol ; 15,01 à 20 % de maltodextrine ; et jusqu'à 4,99 % de polydextrose.

7. Formulation chocolatée avec de la caroube, des faibles teneurs en caféine et en théobromine, sans lait, sans sucre ajouté, sans gluten, sans soja et avec des fibres, selon la revendication 1, **caractérisée en ce que**, alternativement, la formulation préférée est complétée par : 32,80 % de poudre de caroube ; 31,63 % de beurre de cacao ; 0,01 % de liqueur de cacao ; 15,00 % de maltitol ; 15,10 % de maltodextrine ; et 4,90 % de polydextrose.

8. Formulation chocolatée avec de la caroube, des faibles teneurs en caféine et en théobromine, sans lait, sans sucre ajouté, sans gluten, sans soja et avec des fibres, avec 0,4 % de lécithine de tournesol, 0,07 % d'arôme vanille et 0,05 % d'arômes gianduia, **caractérisée en ce que** la formulation est complétée par : 20 à 45 % de beurre de cacao ; jusqu'à 5,5 % d'ingrédients avec de la graisse de coco ; 3 à 35 % de poudre de caroube ; jusqu'à 25 % de liqueur de cacao ; 10 à 40 % de sucres à index glycémique élevé ; jusqu'à 20 % de maltodextrine ; jusqu'à 20 % de dérivés du riz ; jusqu'à 24 % de poudre de patate douce ; et jusqu'à 15 % de polydextrose.

9. Formulation chocolatée avec de la caroube, des faibles teneurs en caféine et en théobromine, sans lait, sans sucre ajouté, sans gluten, sans soja et avec des fibres, selon la revendication 8, **caractérisée en ce que** l'ingrédient de graisse de coco est choisi parmi l'huile de coco et le lait de coco ou leurs mélanges.

10. Formulation chocolatée avec de la caroube, des faibles teneurs en caféine et en théobromine, sans lait, sans sucre ajouté, sans gluten, sans soja et avec des fibres, selon la revendication 8, **caractérisée en ce que** le sucre à faible indice glycémique est choisi parmi le sucre de caroube et le sucre de coco ou leurs mélanges.

11. Formulation chocolatée avec de la caroube, des faibles teneurs en caféine et en théobromine, sans lait, sans sucre ajouté, sans gluten, sans soja et avec des fibres, selon la revendication 8, **caractérisée en ce que** le dérivé de riz est choisi parmi la farine de riz, l'extrait de riz soluble dans l'eau en poudre et la poudre pour préparation alimentaire à base de riz ou un mélange de ceux-ci.

12. Formulation chocolatée avec de la caroube, des faibles teneurs en caféine et en théobromine, sans lait, sans sucre ajouté, sans gluten, sans soja et avec des fibres, selon la revendication 8, **caractérisée par**, une formulation préférée avec de la liqueur de cacao, avec la complémentarité de : beurre de cacao : 25,00 % ; extrait de riz : 15,00 % ; poudre de faux acacia : 7,00 % ; sucre de coco : 33,00 % ; poudre de patate douce : 9,48 % ; liqueur de cacao : 10,00 % ; émulsifiant de lécithine de tournesol : 0,40 % ; arôme identique à l'arôme naturel de vanille : 0,07 % ; arôme identique à l'arôme naturel de gianduia : 0,05 %.

13. Formulation chocolatée avec de la caroube, des faibles teneurs en caféine et en théobromine, sans lait, sans sucre ajouté, sans gluten, sans soja et avec des fibres, selon la revendication 8, **caractérisée par**, une formulation préférée sans liqueur de cacao, avec la complémentarité de : beurre de cacao : 30,00 % ; extrait de riz : 15,00 % ; poudre de faux acacia : 15,00 % ; sucre de caroube : 30,00 % ; poudre de patate douce : 9,48 % ; émulsifiant de lécithine de tournesol : 0,40 % ; arôme identique à l'arôme naturel de vanille : 0,07 % ; arôme identique à l'arôme naturel de gianduia : 0,05 %.
